(19) Europäisches Patentamt
European Patent Office
Office européen des brevets

(11) **EP 4 509 273 A1**

(12) **EUROPEAN PATENT APPLICATION**

(43) Date of publication:
**19.02.2025 Bulletin 2025/08**

(21) Application number: **23192240.2**

(22) Date of filing: **18.08.2023**

(51) International Patent Classification (IPC):
**B25J 9/16** (2006.01)     **B65H 7/12** (2006.01)

(52) Cooperative Patent Classification (CPC):
**B25J 9/1694; B25J 9/1687; B25J 9/1697;**
G05B 2219/37388; G05B 2219/37433;
G05B 2219/40035; G05B 2219/40053;
G05B 2219/40078; G05B 2219/40537;
G05B 2219/45047

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **AM-Flow Holding B.V.**
**1018 JA Amsterdam (NL)**

(72) Inventors:
• **JANSSEN, Nick**
**1018 JA Amsterdam (NL)**
• **SZÜCS, Eduard-Istvan**
**1018 JA Amsterdam (NL)**

(74) Representative: **V.O.**
**P.O. Box 87930**
**2508 DH Den Haag (NL)**

(54) **OBJECT SORTING DEVICE AND METHOD OF SORTING OBJECTS AND A DISENTANGLEMENT STATION**

(57)     An improved sorting device (1) for sorting objects (O) is provided herein that comprises an object manipulator (2) to manipulate objects, a controller (3) to control the object manipulator and a sensor (4) to output a sense signal (4S) indicative for a mechanical behavior of an object that is manipulated by the object manipulator. The controller is configured to analyze the sense signal and to cause the object manipulator to displace the object to a location dependent on whether or not the analysis of the sense signal indicates that the manipulated object is an interlocked object.

FIG. 1

## Description

BACKGROUND

The present application pertains to an object sorting device.

The present application further pertains to a method of sorting objects.

The present invention further pertains to an arrangement of the sorting device and a disentanglement station.

In modern production processes products can be manufactured at high production rates. Such production processes may comprise a plurality of production steps, such as additive production steps like 3D-printing, subtractive production steps like cutting with a lathe or mill and other production steps like dying, assembling, polishing and the like. Progress of a production process is severely hampered if components to be produced or their precursors get mutually entangled by hooking into each other. Accordingly, there is a need to identify and remove mutually entangled components from the production process. Hereinafter, the wording "interlocked object" will be used to refer to a group of two or more mutually entangled components. For the additive industry, an additional differentiation needs to be made. *Intentional* interlocking objects, i.e. a necklace, that are produced to be as such, as opposed to *unintentional* interlocking objects that only become interlocking after manufacturing, e.g., during transport or when combined in batches.

SUMMARY

In accordance with the above-mentioned need, it is an aim of the present disclosure to provide an improved sorting device for sorting objects. It is a further aim of the present disclosure to provide an improved method for sorting objects.

In accordance with the first aim the improved sorting device comprises an object manipulator to manipulate objects with a dynamic mechanical actuation as input, a controller to control the object manipulator and a sensor to output a sense signal indicative for a mechanical behavior of an object that is manipulated by the object manipulator. The controller is configured to analyze the sense signal and to cause the object manipulator to displace the object to a location dependent on whether or not the analysis of the sense signal indicates that the manipulated object is, e.g., an interlocked object.

It has been recognized by the inventors that a sensed mechanical behavior is a very suitable indicator to distinguish interlocked objects from non-interlocked objects, or even deduce other parameters like mass, eigenfrequencies, and more.

The sensed mechanical behavior may be a mechanical response which naturally results from the act of manipulating the object. For example if the object-manipulator is a robot arm that picks up the object from a conveyor belt, it brings the object into motion. This induced motion of the object can be sensed as a vibration in the robot arm for example using an acceleration sensor or microphone attached to a robot arm gripper, or near the gripper. The vibrations for an interlocked object, such as a ring with keys will be substantially different from those of a single key for example.

Alternatively, or additionally, the sensed mechanical behavior may be a mechanical response to a specific vibration which is purposefully induced in the object. In one example this is achieved that the controller is configured to cause the object manipulator to perform additional movements other than those required to displace the object. In another example, the improved sorting device includes a vibration device that induces a vibration in the object-manipulator to provoke a mechanical response of the object to be measured. Purposefully inducing a mechanical vibration enables a more powerful analysis. During the analysis the induced motion and/or vibration can be varied in frequency, amplitude and the like, with specific motion-profiles, like impulses, step-motions, sinc-functions, or colored noises, a reconstruction of the object's transfer-function can be derived. The frequency domain transfer function reconstruction, or shortly 'mechanical response', 'in both the natural or specific mechanical vibration cases, can be directly derived from the input actuation and sensed output behavior. In case of the natural input, a calibration or initial 'dry run' needs to be performed to retrieve the sorting device's natural behavior.

Also the variations may be determined interactively, depending on intermediate analysis results. Sensing a mechanical response as a result of motion and/or vibration that is induced on purpose may take place while the manipulated object is still affected by a mechanical response which naturally results from the act of manipulating the object. This has the advantage that the analysis of the sense signal can take place immediately. In alternative examples sensing the mechanical response is postponed until the object is no longer affected by this natural cause. This simplifies signal analysis.

Obtaining and analyzing the mechanical response that naturally results from the act of manipulating the object is considered a preferred approach as it contributes to a fast, efficient process.

In an embodiment of the sorting device the controller comprises a signal analysis module having a Fourier transformation unit to compute a frequency spectrum of the sensed signal in a time window and a spectrum analysis unit configured to generate from the computed spectrum an interlocked object signal which indicates whether the object is a single component or the object comprises mutually interlocked components. It has been found that the frequency spectrum of the sensed signal is a strong indicator for determining whether or not the manipulated object comprises mutually entangled components. Various options are possible to further process the frequency spectrum in order to finalize this determination. According to one approach, the spectrum analysis unit comprises a comparison unit to compute a respective distance value based on a comparison of the spectrum of the sensed signal with a respective reference spectrum obtained for each of one or more reference components that are not interlocked, the comparison unit being configured to generate an interlocked object signal that indicates that the object comprises mutually interlocked components if each of the computed distance values exceeds a predetermined threshold distance. In a variation of this approach, the comparison unit is configured to compute the respective distance value with respect to a reference spectrum by weighting respective differences in magnitude of spectrum components in accordance with a confidence interval for the respective magnitudes of the spectrum components in the reference spectrum. Hence in determining the distance value indicative for a distance between the spectrum observed for a manipulated component and a reference spectrum of a difference in magnitude of a specific frequency component is given a relatively high weight if the confidence interval for the magnitude of that component in the reference spectrum is small and is given a relatively low weight if the confidence interval for the magnitude of that component in the reference spectrum is large.

According to another approach, the signal analysis module further comprises a convolutional neural network, CNN, that is trained to issue the interlocked object signal in response to the of the transfer function derived from the response of the object to the input actuation. This approach is very suitable for application in high-mix high-volume production processes, wherein multiple components of varying types are manufactured. In one example the CNN is trained to issue an object classification on the basis of transfer function by learning from training example pairs each comprising for a respective object its observed transfer function and its classification. The objects for which the CNN is trained may include deliberately interlocked objects, like a chain of elements. The trained CNN therewith obtained is capable to issue a classification of the objects for which it is trained. If it receives the transfer function of an object hold by the object manipulation device it outputs in response thereto the classification of that object. If it does not classify the object in one of the classes for which it is trained, this indicates that the object comprises inadvertently interlocked components. In another example the CNN is not trained in advance to classify specific objects, but it is trained compare the observed transfer function with transfer functions of deliberately interlocked objects. If it determines that the observed transfer function is not comparable with a transfer function of any of the deliberately interlocked objects this indicates that the object comprises inadvertently interlocked components.

In an embodiment of the sorting device the sensor is a camera that monitors the object that is manipulated and the controller is configured to compare subsequent image data of mutually different image frames captured by the camera. In an example thereof the camera provides the sensor data as binary images, wherein one binary value represents the object and the other binary value represents a background.

Downside of the camera embodiment however, is a limited capability to capture mechanical vibrations. Typical frame-rates are at 60Hz, though high-end market solution go up to 2.1Mfps, it would be costly hardware wise, and impose substantial computational requirements for processing the video data to obtain the mechanical response of the observed object to the input actuation signal. A more promising embodiment would henceforth be either using acoustic sensing, or proper acceleration sensing which are both continuous measurements and give direct vibrational information (hence no post-processing is needed).

Acoustic sensing still has limited bandwidth as well as being prone to environmental distortions. However, it was shown by the inventors to be a proven to work mechanism to indeed show interlocking vibration in the sensed signals.

A proper acceleration, on or close to the object, would have a much larger bandwidth, within a small accelerometer chip, that due to its usage in PDA's has significantly dropped in cost in recent years. In an embodiment the accelerometer chip is temporarily clamped to the object while it is gripped by the object manipulation device.

Some embodiments of the sorting device are further configured to initiate a process to separate the components comprised in an object that it has detected to comprise mutually entangled components from each other. In some examples thereof the sorting device is configured to perform the separation process itself. In other examples the sorting device is part of an arrangement with a disentanglement station, wherein the sorting device is configured to transmits the object to the disentanglement station to perform the separation process.

In accordance with the further aim specified above, an improved method of sorting objects is provided that comprises:

> manipulating an object with an object manipulator;
> sensing a mechanical vibration occurring in the manipulated object;
> analyzing the sensed mechanical vibration;
> placing the object with the object manipulator at a location dependent on whether or not the analysis of the sensed mechanical vibration indicates that the object picked up by the object manipulator is an interlocked object.

BRIEF DESCRIPTION OF THE DRAWINGS

These and other aspects are discussed in more detail with reference to the drawings. Therein:

FIG. 1 schematically shows an embodiment of an improved sorting device for sorting objects;

FIG. 2 shows an aspect of the embodiment of FIG. 1 in more detail;

FIG. 3 schematically shows another embodiment of an improved sorting device for sorting objects;

FIG. 4 schematically shows again another embodiment of an improved sorting device for sorting objects;

FIG. 5 shows a first example of a signal analysis module in an embodiment of an improved sorting device for sorting objects;

FIG. 6 shows a second example of a signal analysis module in an embodiment of an improved sorting device for sorting objects;

FIG. 7 shows embodiments of an improved method for sorting objects;

FIG. 8 shows further embodiments of the improved method for sorting objects;

FIG. 9 shows measurement results;

FIG. 10 illustrates an environment for training a neural network in the signal analysis module of FIG. 6;

FIG. 11 illustrates an aspect of another method of training said neural network;

FIG. 12 schematically shows a further embodiment of an improved sorting device for sorting objects;

FIG. 13 summarizes various aspects of the present disclosure.

## DETAILED DESCRIPTION OF EMBODIMENTS

Like reference symbols in the various drawings indicate like elements unless otherwise indicated.

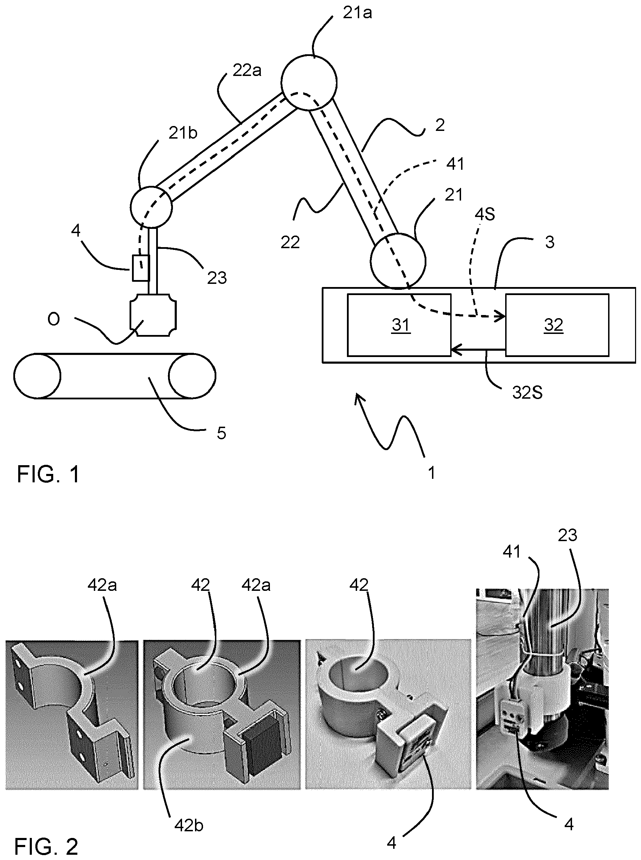

FIG. 1 schematically shows a sorting device 1 for sorting objects O. The sorting device comprises an object manipulator 2 to manipulate objects, a controller 3 to control the object manipulator 2 and a sensor 4. The sensor 4 is configured to output a sense signal 4S that is indicative for a mechanical behavior of an object O that is manipulated by the object manipulator 2. The controller 4 is configured to analyze the sense signal 4S and to cause the object manipulator 2 to displace the object O to a location dependent on whether or not the analysis of the sense signal indicates that the manipulated object is an interlocked object.

In the embodiment shown, the object-manipulator 2 is a robot arm that comprises a set of links 22, 22a and end-effector 23 (e.g. a gripper) interconnected by powered joints 21, 21a, 21b. The controller 3 comprises a driver module 31 and a signal analysis module 32. The signal analysis module 32 analyses the sense signal 4S to determine whether or not the sense signal indicates that the manipulated object is an interlocked object and indicates the result of the analysis with an output signal 32S provided to the driver module 31. In response to this output signal the driver module 31 provides respective drive signals (not shown) to respective powered joints 21, 21a, 21b to displace the object O to the appropriate location.

The mechanical behavior of the object can be measured as a response to a mechanical stimulus. A mechanical stimulus can be provided in various ways. Typically a mechanical stimulus is inherently present if the object is manipulated by the object manipulator 2. This can be due to the accelerations to which the object is subjected when the gripper 23 of the object manipulator 2 changes its direction or velocity. In particular it is noted that an interlocked object shows a strong mechanical response due to a rearrangement of its parts that occur in the transition from a state where it rests on a surface and a state wherein it is carried by a robot gripper. Alternatively a mechanical stimulus can be provided in that the controller 3 causes the object-manipulator 2 to perform additional movements that are not essential for the positioning of the object O. As an example thereof the controller 3 causes the object-manipulator 2 to rotate the object around mutually different axes. According to one option, the alternative mechanical stimulus is provided in a time interval that the object does not mechanically respond to mechanical stimuli that are inherent to the manipulation of the object. That is, the alternative mechanical stimulus can be provided after the object-manipulator 2 has been kept in a fixed position or moved stationary for some time. In this way the signal analysis is relatively simple in that there is a direct relationship between the alternative mechanical stimulus and the response to this alternative mechanical stimulus by the object. According to another option, the alternative mechanical stimulus is provided while the object is still subject to mechanical stimuli that are inherent to the manipulation of the object. This is advantageous in that a delay in carrying out the object manipulations can be avoided. It is noted that this can also be achieved in the first-mentioned option if the alternative mechanical stimulus is provided during a stationary movement. In that case a displacement of the object can continue while the alternative mechanical stimulus is provided.

In an embodiment the signal analysis module is configured to process a transfer function of the object instead of the sense signal 4S. In that case the sorting device further includes a processing unit that computes the transfer function of the object from the response of the object to the mechanical stimulus applied thereto. The object's transfer function can be efficiently determined from its response to specific stimuli or motion-profiles, like impulses, step-motions, sinc-functions, or colored noises. In some examples the response can be determined for two or more of such stimuli and should this result in different estimates for its transfer function a consolidated average transfer function can be derived by averaging the individual estimated transfer functions. The mechanical response of an object can be measured in various ways. In the embodiment shown the sensor 4 is a microphone that is attached to the end-effector 23. At this position it senses vibrations in the end effector 23 resulting from the mechanical response of the object O. In the example shown, a wired link 41 is provided that supplies the sense signal 4S to the signal analysis module 32. In other example a wire-less connection is provided.

By way of example FIG. 2 shows from left to right how the microphone 4 is clamped to a tubular portion of the end effector 23 with a clamp 42. On the left a first clamp portion 42a is shown. Next it is shown how the clamp 42 is composed of the first clamp portion 42a and a second clamp portion 42b. Subsequently it is shown how the microphone 4 is attached to the clamp 42 and in the rightmost picture it is shown how the clamp 42 with the microphone 4 is attached to the tubular portion of the end effector 23.

Whereas in the example of FIG. 1, 2 the sensor 4 used is a microphone, it is alternatively possible that an acceleration sensor is attached to the object manipulator 2. The mechanical response by the object O will affect accelerations sensed in the object manipulator 2. In that case the signal analysis module 32 analyses the sense signal 4S indicative for the sensed acceleration to determine whether or not the sense signal indicates that the manipulated object is an interlocked object.

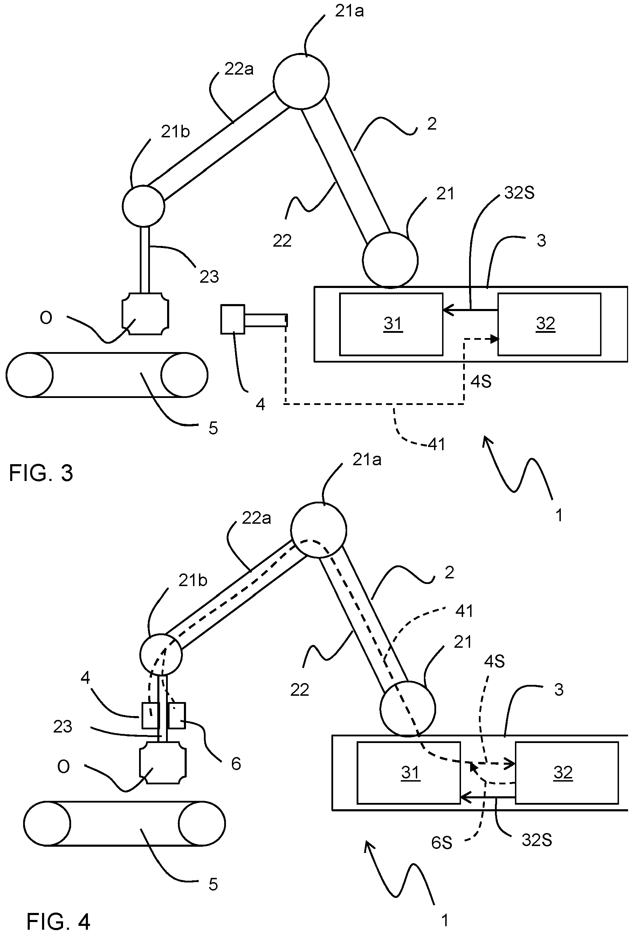

It is not necessary that a microphone 4 is clamped or otherwise attached to the object-manipulator. By way of example, FIG. 3 shows an alternative embodiment, wherein the microphone is positioned in the neighborhood of the trajectory of the object O. It is not necessary that the microphone 4 is capable to sense an acoustic signal resulting from a mechanical response of the object O over its full trajectory. The microphone 4 may for example be positioned at a location near a location where objects are picked up by the object manipulator 2 so as to sense an acoustic signal resulting from a mechanical response of the object O to the mechanical stimulus to which the object is subjected when it is picked up from a carrier surface, such as a conveyor belt.

In the example shown in FIG. 4, the sorting device 1 comprises a mechanical vibration inductor 6 that induces a mechanical vibration in the end effector 23, and therewith provides a mechanical stimulus to the object O, in accordance with a signal 6S provided by the signal analysis module 32. It is an advantage of this embodiment that the mechanical stimulus can be provided in a higher frequency range than that is possible by directly inducing motions in the powered joints 21. Also in this case, different options are available. The mechanical vibration may be supplied at a point in time that mechanical responses to the movement of the object manipulator 2 are minimal, e.g. during standstill of the manipulator. This contributes to a simplified signal analysis procedure. Alternatively, the mechanical vibration may be supplied at an arbitrary point in time. In this way a more efficient operation of the object manipulator 2 may be achieved. It is also an option to supply the mechanical vibration during a stationary movement of the object manipulator 2. In that displacement of the object O can continue without resulting in a mechanical stimulus to the object O.

Various aspects of the mechanical response of the object may be analyzed, such as frequency-amplitude characteristics, e.g. identifying relations peaks/troughs (spreads, ratios). Such frequency-amplitude analysis may be performed in a single band or in multiple bands.

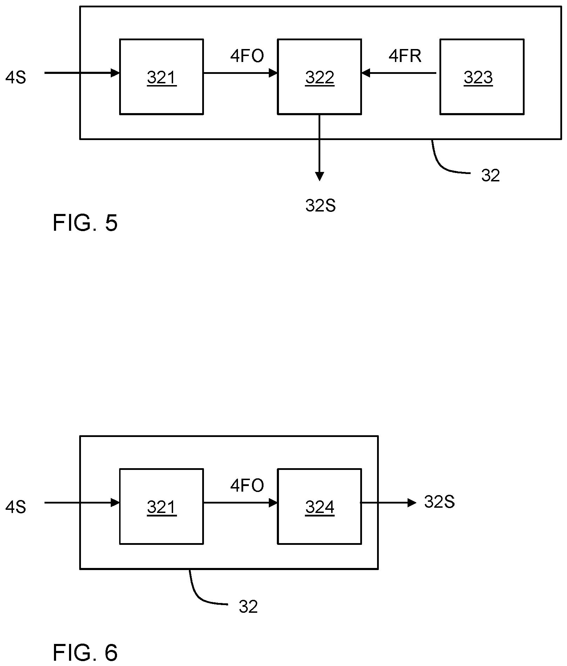

FIG. 5 schematically shows an embodiment of a signal analysis module 32. The signal analysis module 32 comprises a Fourier transformation unit 321, for example using a Fast Fourier Transform, to compute a spectrum 4FO of the sensed signal 4S in a time window. The time window may for example extend over a fixed time-interval relative to when a mechanical stimulus is provided to the object. Alternatively, the time window may be a moving window. In comparison unit 322 the spectrum 4FO of the sensed signal 4S is compared with one or more reference spectra 4FR provided by reference unit 323. Based on the comparison the comparison unit 322 provides the output signal 32S that indicates whether or not the manipulated object is identified as an interlocked object.

The Fourier spectrum 4FO determined for an individual object O can be represented as a vector of which each component is representative for a frequency range, e.g. 0-1 Hz, 1-2 Hz, ...etc. Typically only the magnitude is represented. In one example the objects O provided to the sorting device 1 are either a predetermined component or two or more entangled predetermined components. In that case, it suffices that a reference spectrum 4FR is available for that predetermined component. If the comparison unit 322 determines that the spectrum of an individual object differs more than a threshold value from the reference spectrum 4FR for the predetermined component, its output signal 32S indicates that the manipulated object is identified as an interlocked object. Otherwise it identifies the manipulated object as specimen of the predetermined component.

An indication for the difference D in spectrum can be computed by the comparison unit 322 as follows:

$$D = \sqrt{\sum_i \left( \frac{F_{O,i} - F_{R,i}}{c_i} \right)^2}$$

Therein $F_{O,i}$ is the magnitude of the $i^{th}$ component of the spectrum 4FO determined for the object O and $F_{R,i}$ is the magnitude of the $i^{th}$ component of the reference spectrum 4FR. Furthermore $c_i$ is a weighting factor for each component. The reference spectrum 4FR can be determined empirically as the spectrum obtained from an object for which it is independently ascertained, e.g. by a human observer, that it is a specimen of the predetermined component. In one embodiment the weighting factors $c_i$ have a predetermined uniform value. Alternatively, the weighting factors are also determined empirically by obtaining the spectrum subsequent specimens of the predetermined component and to estimate the standard deviation of each component. The weighting factor $c_i$ for each component is then set equal to the estimated standard deviation for said each component. Therewith in the computation of the difference D, a larger weight is assigned to components with a small value for the estimated value standard deviation. It is noted that the above-mentioned computation of the difference is based on the L2 norm. As an alternative, the computation of the difference may be based on the L1 norm or the L∞ norm for example.

In a more complicated case, the manipulated object may be a specimen of component selected from a plurality of predetermined component classes or interlocked object comprising two or more interlocked components, which may be of mutually different predetermined component classes or may be of the same predetermined component class. In that case the comparison unit 322 may determine a difference between the spectrum 4FO determined for the manipulated object O and each of the reference spectra 4FR determined for components of the mutually different component classes. In case the comparison unit 322 determines that the spectrum of an individual object differs more than a threshold value from each of the reference spectra 4FR for the predetermined components, its output signal 32S indicates that the manipulated object is identified as an interlocked object. Otherwise it identifies the manipulated object as specimen of the predetermined component for which the smallest difference was determined.

FIG. 6 shows a signal analysis module 32 of another embodiment of the sorting device. The signal analysis module 32 thereof further comprises a convolutional neural network 324 that is trained to issue the interlocked object signal 32S in response the spectrum 4FO of the sensed signal 4S. The embodiment of FIG. 6 is particularly suitable for more complicated cases, wherein information about the frequency spectrum of some or all of the components is not available. This can be the case in high-mix/high-volume production processes, wherein a wide variety of components is manufactured simultaneously according to various individual consumer product specifications. In these circumstances it is complicated to determine a reference spectrum for each of the components to be manufactured. The embodiment of FIG. 6 circumvents this procedure in that the trained convolutional neural network 324 obviates a comparison with individual reference spectra. Training the convolutional neural network 324 is relatively simple due to the fact that it only needs to be trained to provide a binary output signal indicative whether or not the manipulated object is a single component or an interlocked object comprising two or more components.

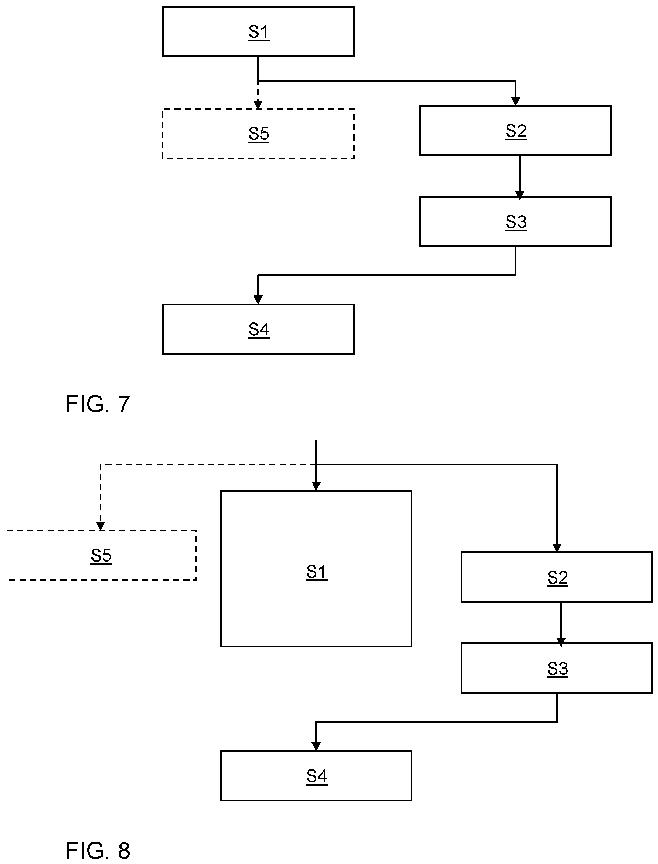

FIG. 7 schematically shows an embodiment of an improved method of sorting objects. The method comprises a step S1 of manipulating an object with an object manipulator. The object manipulator can be a robot arm, or a swing arm, or any other type of manipulator. In step S2 a mechanical vibration occurring in the object is sensed. The mechanical vibration can be sensed as a vibration occurring in the object manipulator, e.g. with a microphone or an acceleration sensor as described in more detail with reference to FIG. 1 and 4. Alternatively, the mechanical vibration can be sensed as an acoustic signal at a location in the vicinity of the object, as described with reference to FIG. 3. The sensed mechanical vibration is analyzed in step S3. In exemplary embodiments step S3 comprises a first sub-step wherein a frequency spectrum of the sensed signal in a time window is computed. The computed frequency spectrum is then analyzed in a subsequent sub-step to generate an interlocked object signal which indicates whether the object is a single component or the object comprises mutually interlocked components. In a subsequent step, the object is placed with an object manipulator at a location dependent on whether or not the analysis of the sensed mechanical vibration indicates that the object picked up by the object manipulator is an interlocked object. In the example shown in FIG. 7, the mechanical vibration sensed in step S2 results from the step S1 of manipulating the object. In this case it is presumed that the mechanical vibration is sensed in step S2 after the object manipulator stopped moving or moves at constant speed.

FIG. 8 shows an alternative example, wherein the step S1 may continue to induce mechanical vibrations in the manipulated object during the sensing step S2.

A still further alternative example is indicated by dashed lines in FIG. 7. Therein a mechanical vibration is induced in step S5 for example as shown in FIG. 4 with element 6. In the example of FIG. 7 the mechanical vibration resulting from the induced mechanical vibration is sensed in step S2. According to one option steps S2 and S5 are postponed until the manipulation in step S1 no longer results in a mechanical response. This facilitates signal analysis. According to another option these steps S2, S5 are not postponed, which may contribute in a more time-efficient implementation of the method.

As noted, it is not necessary that the mechanical sensor is mounted on the object manipulation device. For example, as shown in FIG. 3 it is alternatively possible that a microphone is used that is positioned near a location where the object manipulation device is configured to pick up the object to be manipulated. In one implementation thereof, the driver module 31 is configured to trigger the signal analysis module 32 to start sampling the sense signal from the microphone for further analysis. Alternatively, the signal analysis module 32 may permanently monitor the sense signal and start to perform a detailed analysis upon detecting a characteristic sound occurring upon a first interaction between the object manipulation device and the object. The time window of the sense signal for further analysis may for example have a predetermined duration. Alternatively, the duration may be dependent on an analysis of the samples of the sense signal obtained so far.

Likewise FIG. 8 illustrates as a further alternative example the option wherein steps S1, S2 and S5 are performed in mutually overlapping time intervals.

As noted above, various options are available for analyzing the frequency spectrum as part of step S3. In one example as illustrated in FIG. 5 a respective distance value is computed with respect to each one of one or more reference spectra. Each of the reference spectra is obtained for a respective non interlocked object. According to one option the reference spectrum of an object is obtained by a single measurement of that object according to a method as described in FIG. 7 or FIG. 8 for example. It will be clear that the measurement of the spectra of the reference object is preferably the same as the measurement to be used when carrying out the sorting method. According to another option the reference spectrum of an object is obtained by a plurality of measurements. In that case not only can the distribution of the magnitude of the frequency components in the spectrum be estimated, but also a confidence interval can be determined. In that case an embodiment of the method is enabled wherein a distance value indicative for a distance with respect to a reference spectrum comprises weighting respective differences in magnitude of spectrum components in accordance with a confidence interval for the respective magnitudes of the spectrum components in the reference spectrum.

The distance value determined for a distance between the spectrum associated with a manipulated object and the spectrum associated with a reference object is indicative for the likelihood that the manipulated object and the reference object are specimens of the same object-class. The larger the distance the smaller the likelihood that they are specimens of the same class. and generating an interlocked object signal that indicates that the object comprises mutually interlocked components if each of the computed distance values exceeds a predetermined threshold distance. Hence if it is determined for the manipulated object that its spectrum has a respective distance value for each of the spectra of the reference objects that exceeds a predetermined threshold, it is concluded that the manipulated object is not a specimen of either of the classes of single components, and that the manipulated object comprises two or more entangled components. In addition it may be contemplated to determine reference spectra of objects comprised of entangled components. In that case a small distance value for a distance between the spectrum of the manipulated object and the reference spectra of an object comprised of entangled components is an indication that the manipulated object is a specimen of such an object comprised of entangled components.

Experiments were performed with an arrangement as shown in FIG. 1 and 2. Therein the sensor signal from the microphone 4 was sampled at a rate of 3072 samples per second during one second and a power spectral density was computed for 1536 frequencies. The experiments were performed for two types of non-interlocked objects and two types of interlocked objects. The interlocked objects have power spectral density curves PSD1, PSD2 respectively. It was observed that the interlocked objects in these experiments show a clear peak (p1, p2) of their power spectral density curve at a frequency of about 950 Hz. One type of interlocked objects further showed a second peak at about 1050 Hz. It is conjectured that mutually entangled components in an interlocked object tend to swing relative to each other at these frequencies. It is further observed that the magnitude of the power spectral density curve PSD2 outside these peaks p2, p2a is generally lower than that of the other objects. It is presumed that friction between mutually entangled components in these type of interlocked objects tends to dampen vibrations.

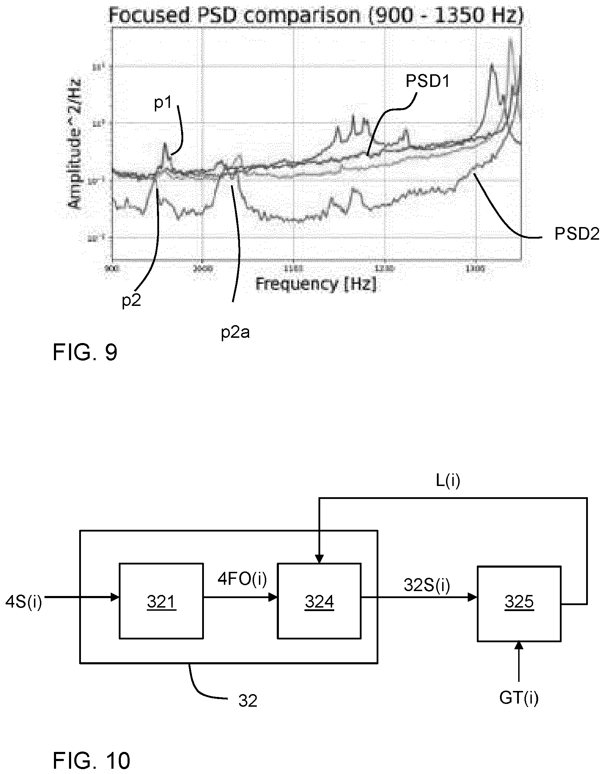

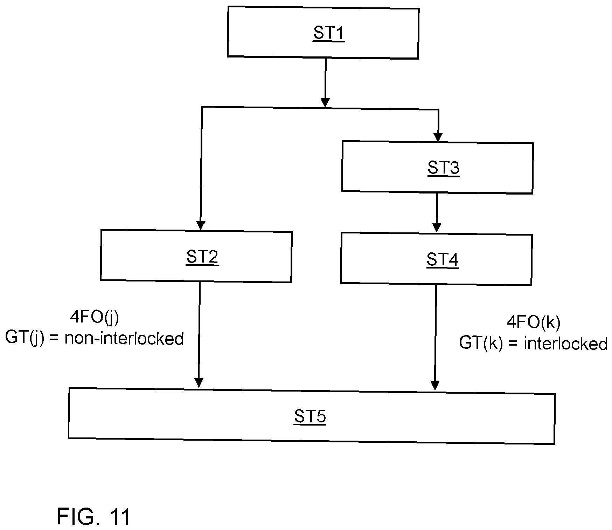

FIG. 10 and FIG. 11 schematically illustrate how a neural network 324 as shown in the embodiment of FIG. 6 can be trained. Therein FIG. 10 schematically shows a training environment and FIG. 11 shows steps of a method of training the neural network.

In the training environment of FIG. 10 the sorting device is supplied with objects O(i), having a status interlocked or not indicated by a ground truth GT(i). During the training procedure, the signal analysis module 32 with the convolutional neural network 324 to be trained is caused to indicate with a signal 32S(i) for object O(i) whether it estimates that the manipulated object is a single component or an interlocked object, and a loss value L(i) is computed based on whether or not the estimation indicated by the signal 32S(i) corresponds to the ground truth GT(i). The network weights of the convolutional neural network 324 are updated by back propagation of the loss value L(i). According to one option the ground truth is provided by a human observer.

According to another option, training is accelerated by a simulation procedure as shown in FIG. 11. In step ST1 thereof simulation models of various components are provided. Typically, these simulation models are readily available for components manufactured before in accordance with customer requirements. In step ST2 a mechanical behavior of the objects by the object manipulator is simulated and a frequency spectrum of the corresponding simulated mechanical vibrations is determined. The respective frequency spectra obtained for the various components are training examples of the class of integral (non-interlocked) objects for training the convolutional neural network 324. In step ST3 a mechanical interaction between two or more components is simulated. If therewith two or more components get entangled, then in step ST4 the mechanical behavior of the entangled combination upon manipulation by the object manipulator is simulated and a frequency spectrum of the corresponding simulated mechanical vibrations is determined. The respective frequency spectra obtained for the entangled combinations are training examples of the class of interlocked objects for training the convolutional neural network 324. In step ST5 the convolutional neural network 324 of the signal analysis module 32 is trained with training examples of non-interlocked objects (O(j)) obtained in steps S1 and S2 and with training examples of interlocked objects (O(k)) obtained in steps S1, S3 and S4.

It is noted that training the convolutional neural network 324 is relatively simple due to the fact that it only needs to indicate whether an object O(j) comprises mutually entangled components or not.

In case the objects to be analyzed either comprise known components or entangled combinations thereof, the neural network can be trained to identify the known components. Upon recognizing the response of an object it indicates that it is a known component, which by definition is not an interlocked object. If it does not recognize the response, it must be the response of an interlocked object comprising mutually entangled components.

In case the neural network should be capable to identify also unknown single components as not being interlocked objects, a more elaborate training procedure is required with a diverse set of training examples, e.g. including single-interlocking components, multiple-interlocking components, non-interlocking solid components, non-interlocking spiky components, non-interlocking hollow components.

Also varying training circumstances may be used for even more robustness. E.g. the training circumstances may include moving the gripper with no object at all, moving the gripper along different movements paths etc.

A signal analysis module 32 may include a pre-filtering section to mitigate noise, for example environmental noise from driving cars, or trucks etc. In case the signal analysis module 32 is configured to specifically analyze a response to a predetermined stimulus, as in the embodiment of FIG. 4, a pre-filtering section may be provided to mitigate noise in the response due to the act of gripping or displacing the object.

The convolutional neural network 324 renders it possible to identify patterns in the frequency spectrum indicative for the presence of an interlocked object. It can still sense an interlocked object, even if the specific pattern is shifted in the frequency space.

In a further embodiment the convolutional neural network, CNN, 324 is a scale insensitive convolutional neural network 324. As an example, reference is made to SINet: A Scale-insensitive Convolutional Neural Network for Fast Vehicle Detection.

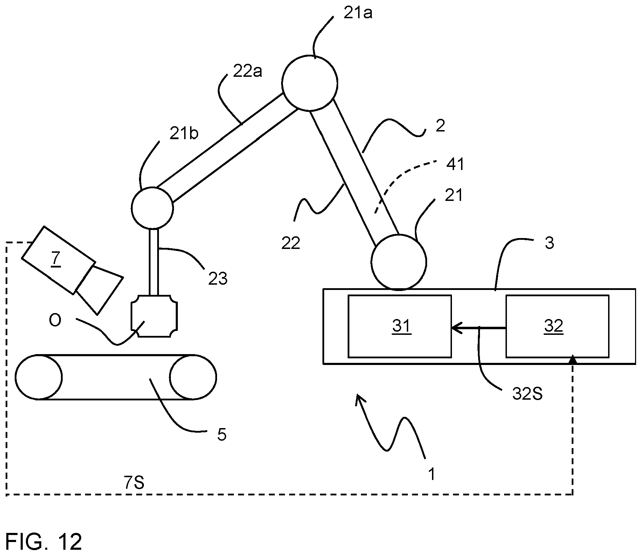

FIG. 12 shows an a further embodiment of an improved sorting device. Parts therein corresponding to those of FIG. 1 have the same reference. The embodiment of FIG. 12 differs from the embodiment of FIG. 1 in that the sensor 7 is a camera that monitors the object O that is manipulated. The camera, for example a high speed camera, outputs a sense signal 7S, representing image data to the controller 32. In one example the controller 32 is configured to compare subsequent image data of mutually different image frames. In case the object is a single component, and provided that the object is properly gripped by the object manipulator, then image data of mutually different image frames will be substantially the same if the camera is mounted to the gripper. In case the camera 7 is arranged at a fixed position image data of mutually different image frames can associated by a translation. However, if the object O comprises a set of mutually entangled components, then these components will tend to move relative to each other due to the manipulation by the object manipulator. This is clearly visible from a comparison of image data of mutually different image frames. It can be sufficient if the sensor data 7S provided by the camera 7 are binary images, showing the object O vs the background. The binary image data can be efficiently processed. Examples of sorting device as disclosed in one or more of the embodiments specified above may further be configured to initiate a separation process upon detecting that an object comprises mutually interlocked components. In the separation process the components that are mutually entangled are separated from each other. In one such example the sorting device is configured to perform the separation process for example by shaking the object until only the component that is directly gripped by the object manipulator remains. While performing the separation process it can monitor the object to determine when the separation process is succeeded.

In another example the sorting device is part of an arrangement with a disentanglement station, and the sorting device is configured to transmit the object to the disentanglement station to perform the separation process. Also a combination is possible wherein the sorting device first attempts to separate the entangled components from each other and if it does not succeed within a predetermined time limit forwards the object to the disentanglement station. In one example the separation process in the disentanglement station is performed manually, or the object is transmitted to a manual disentanglement station if automatic disentanglement did not succeed.

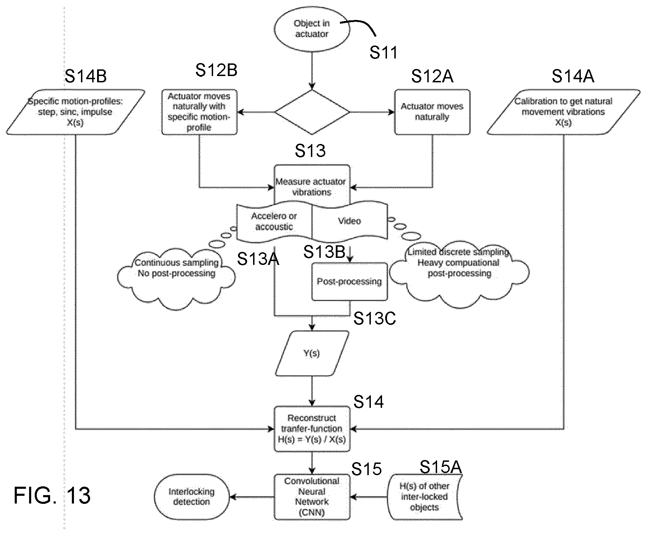

FIG. 13 summarizes various aspects of the present disclosure.

As shown therein, in S11 an object is handled by an object-manipulator and the object-manipulator may induce therein vibrations either S12A by object-manipulator motions that are already necessary to displace the object, or S12B by deliberately imposing a specific motion profile. In step S13 the mechanical response of the object is measured, for example the mechanical response Y(s) in the Laplace domain. In one approach S13A the mechanical response is measured by a microphone or an accelerometer. This does not require substantial processing. Alternatively video data is acquired in step S13B and the video data is post-processed to determine the response Y(s). The transfer function H(s) of the object can then be estimated in block S14 from the mechanical response and the function X(s) specifying the mechanical stimulus in the Laplace domain by the relationship.

$$H(s) = Y(s)/X(s)$$

The mechanical stimulus for which the function X(s) is computed can be the natural movement imposed on the object by manipulating it with the object-manipulator (S14A) or be a specific motion profile imposed thereon (S14B), e.g. a step function, impulse function sinc function or the like.

The transfer function computed in S14 is then provided as input to a CNN to determine (S15) whether the object for which the transfer function is computed is an undeliberately interlocked object.

In the example shown, the CNN is trained to compare S15A the computed transfer function H(s) with transfer functions of deliberately interlocked objects. If it determines that the observed transfer function is not comparable with a transfer function of any of the deliberately interlocked objects this indicates that the object comprises inadvertently interlocked components.

In another example the CNN is trained to issue an object classification on the basis of a transfer function by learning from training example pairs each comprising for a respective object its observed transfer function and its classification. The objects for which the CNN is trained may include deliberately interlocked objects, like a chain of elements. The trained CNN therewith obtained is capable to issues a classification of the objects for which it is trained. If it receives the transfer function of an object hold by the object manipulation device it outputs in response thereto the classification of that object. If it does not classify the object in one of the classes for which it is trained, this indicates that the object comprises inadvertently interlocked components

In the claims the word "comprising" does not exclude other elements or steps, and the indefinite article "a" or "an" does not exclude a plurality. A single component or other unit may fulfill the functions of several items recited in the claims. The mere fact that certain measures are recited in mutually different claims does not indicate that a combination of these measures cannot be used to advantage. Any reference signs in the claims should not be construed as limiting the scope.

## Claims

1. A sorting device (1) for sorting objects (O) comprising:

   an object manipulator (2) to manipulate objects;
   a controller (3) to control the object manipulator;
   a sensor (4,7) to output a sense signal (4S) indicative for a mechanical behavior of an object that is manipulated by the object manipulator;
   wherein the controller is configured to analyze the sense signal and to cause the object manipulator to displace the object to a location dependent on whether or not the analysis of the sense signal indicates that the manipulated object is an interlocked object.

2. The sorting device (1) according to claim 1, wherein the sensor (4) is a microphone or an acceleration sensor.

3. The sorting device (1) according to claim 1 or 2, further comprising a means (6) to inducing a mechanical vibration, wherein the controller (4) is configured to determine how the induced mechanical vibration affects the sense signal (4S) in said analysis.

4. The sorting device (1) according to either of the preceding claims, wherein the controller (3) comprises a signal analysis module (32) having a Fourier transformation unit (321) to compute a spectrum (4FO) of the sensed signal (4S) in a time window and a spectrum analysis unit (322, 324) configured to generate an interlocked object signal (32S) which indicates whether the object is a single component or the object comprises mutually interlocked components, based on the computed spectrum (4FO).

5. The sorting device (1) according to claim 4, wherein the spectrum analysis unit comprises a comparison unit (322) to compute a respective distance value based on a comparison of the spectrum (4FO) of the sensed signal (4S) with a respective reference spectrum (4FR) obtained for each of one or more reference components that are not interlocked, the comparison unit (322) being configured to generate an interlocked object signal (32S) that indicates that the object comprises mutually interlocked components if each of the computed distance values exceeds a predetermined threshold distance.

6. The sorting device (1) according to claim 5, wherein the comparison unit (322) is configured to compute the respective distance value with respect to a reference spectrum by weighting respective differences in magnitude of spectrum components in accordance with a confidence interval for the respective magnitudes of the spectrum components in the reference spectrum.

7. The sorting device according to claim 4, wherein the signal analysis module (32) further comprises a convolutional neural network, CNN, (324) that is trained to issue the interlocked object signal (32S) in response the spectrum (4FO) of the sensed signal (4S).

**8.** The sorting device according to claim 7, wherein the convolutional neural network, CNN, (324) is a scale insensitive convolutional neural network (324).

**9.** The sorting device according to claim 1, wherein the sensor (7) is a camera that monitors the object (O) that is manipulated and wherein the controller (32) is configured to compare subsequent image data of mutually different image frames captured by the camera.

**10.** The sorting device according to claim 9, wherein the camera (7) provides the sensor data (7S) as binary images, wherein one binary value represents the object (O) and the other binary value represents a background.

**11.** The sorting device according to any of the preceding claims, wherein the sorting device upon detecting that the object comprises mutually interlocked components initiates a process to separate the components comprised in the interlocked components from each other.

**12.** The sorting device according to claim 11, configured to perform the process to separate the components

**13.** An arrangement of the sorting device of claim 11 and a disentanglement station, wherein the sorting device is configured to transmits the object to the disentanglement station to perform said process.

**14.** A method of sorting objects comprising:

manipulating (S1) an object with an object manipulator;
sensing (S2) a mechanical vibration occurring in the manipulated object;
analyzing (S3) the sensed mechanical vibration;
placing (S4) the object with the object manipulator at a location dependent on whether or not the analysis of the sensed mechanical vibration indicates that the object picked up by the object manipulator is an interlocked object.

**15.** The method of sorting objects according to claim 14, wherein the sensor (4,7) is a microphone, an acceleration sensor or a camera.

FIG. 1

FIG. 2

FIG. 3

FIG. 4

4S → | 321 | —4FO→ | 322 | ←4FR— | 323 |

↓ 32S

32

FIG. 5

4S → | 321 | —4FO→ | 324 | → 32S

32

FIG. 6

```
┌─────────────────────────┐
│           S1            │
└─────────────────────────┘
      ┊              │
      ┊              │
      ▼              ▼
┌ ─ ─ ─ ─ ─ ┐   ┌─────────────┐
    S5          │     S2      │
└ ─ ─ ─ ─ ─ ┘   └─────────────┘
                       │
                       ▼
                ┌─────────────┐
                │     S3      │
                └─────────────┘
                       │
       ┌───────────────┘
       ▼
┌─────────────┐
│     S4      │
└─────────────┘
```

FIG. 7

```
        ┌ ─ ─ ─ ─ ─ ─ ─ ─ ─┬────────────┐
        ┊                  │            │
        ▼                  ▼            │
┌ ─ ─ ─ ─ ─ ┐   ┌───────────────┐      │
    S5          │               │      │
└ ─ ─ ─ ─ ─ ┘   │      S1       │      ▼
                │               │  ┌─────────────┐
                │               │  │     S2      │
                └───────────────┘  └─────────────┘
                                         │
                                         ▼
                                   ┌─────────────┐
                                   │     S3      │
                                   └─────────────┘
                                         │
                       ┌─────────────────┘
                       ▼
                ┌─────────────┐
                │     S4      │
                └─────────────┘
```

FIG. 8

FIG. 9

FIG. 10

```
                    ┌──────────────────┐
                    │       ST1        │
                    └──────────────────┘
                              │
            ┌─────────────────┴─────────────┐
            │                  ┌─────────────┴────┐
            │                  │       ST3        │
            │                  └──────────────────┘
            │                         │
   ┌────────┴─────────┐     ┌─────────┴────────┐
   │       ST2        │     │       ST4        │
   └──────────────────┘     └──────────────────┘
            │                         │
    4FO(j)                      4FO(k)
GT(j) = non-interlocked     GT(k) = interlocked
            │                         │
   ┌────────┴─────────────────────────┴───────┐
   │                   ST5                     │
   └───────────────────────────────────────────┘
```

FIG. 11

FIG. 12

FIG. 13

EP 4 509 273 A1

Europäisches
Patentamt

European
Patent Office

Office européen
des brevets

# EUROPEAN SEARCH REPORT

Application Number

EP 23 19 2240

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2006/184282 A1 (STRASSER HAGEN [AT] ET AL) 17 August 2006 (2006-08-17)<br>* paragraph [0001] - paragraph [0053] *<br>----- | 1-8,<br>11-15<br>9,10 | INV.<br>B25J9/16<br>B65H7/12 |
| A | US 2012/165986 A1 (FUHLBRIGGE THOMAS A [US] ET AL) 28 June 2012 (2012-06-28)<br>* the whole document *<br>----- | 9,10 | |
| A | US 2011/223000 A1 (MARTINEZ CARLOS [US] ET AL) 15 September 2011 (2011-09-15)<br>* the whole document *<br>----- | 1-15 | |
| A | US 2017/252929 A1 (FUKADA TETSUO [JP]) 7 September 2017 (2017-09-07)<br>* the whole document *<br>----- | 1-15 | |

TECHNICAL FIELDS
SEARCHED        (IPC)

B25J
G05B
B65H
B21D

The present search report has been drawn up for all claims

| Place of search | Date of completion of the search | Examiner |
|---|---|---|
| The Hague | 23 January 2024 | Marinica, Raluca |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................
& : member of the same patent family, corresponding
document

EPO FORM 1503 03.82 (P04C01)

19

## ANNEX TO THE EUROPEAN SEARCH REPORT
## ON EUROPEAN PATENT APPLICATION NO.

EP 23 19 2240

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2024

| Patent document cited in search report | Publication date | Patent family member(s) | | Publication date |
|---|---|---|---|---|
| US 2006184282 A1 | 17-08-2006 | AU | 2003265707 A1 | 19-04-2004 |
| | | EP | 1542918 A2 | 22-06-2005 |
| | | US | 2006184282 A1 | 17-08-2006 |
| | | WO | 2004028939 A2 | 08-04-2004 |
| US 2012165986 A1 | 28-06-2012 | EP | 2470333 A2 | 04-07-2012 |
| | | EP | 2540456 A1 | 02-01-2013 |
| | | US | 2012165986 A1 | 28-06-2012 |
| | | WO | 2011031523 A2 | 17-03-2011 |
| US 2011223000 A1 | 15-09-2011 | EP | 2331301 A1 | 15-06-2011 |
| | | US | 2011223000 A1 | 15-09-2011 |
| | | WO | 2010024795 A1 | 04-03-2010 |
| US 2017252929 A1 | 07-09-2017 | CN | 107150349 A | 12-09-2017 |
| | | DE | 102017102948 A1 | 07-09-2017 |
| | | JP | 6423813 B2 | 14-11-2018 |
| | | JP | 2017154231 A | 07-09-2017 |
| | | US | 2017252929 A1 | 07-09-2017 |

EPO FORM P0459

For more details about this annex : see Official Journal of the European Patent Office, No. 12/82